(19) Europäisches Patentamt / European Patent Office / Office européen des brevets

(11) **EP 4 370 375 B1**

(12) **FASCICULE DE BREVET EUROPEEN**

(45) Date de publication et mention de la délivrance du brevet:
**01.04.2026 Bulletin 2026/14**

(21) Numéro de dépôt: **22741297.0**

(22) Date de dépôt: **11.07.2022**

(51) Classification Internationale des Brevets (IPC):
**B60Q 1/24** *(2006.01)*    **F21S 41/255** *(2018.01)*
**B60Q 1/32** *(2006.01)*    **F21S 41/143** *(2018.01)*
**F21S 41/265** *(2018.01)*    **F21S 41/20** *(2018.01)*
**F21S 41/29** *(2018.01)*    **F21S 43/14** *(2018.01)*
**F21S 45/10** *(2018.01)*    **F21S 43/20** *(2018.01)*
**F21S 43/27** *(2018.01)*    **G02B 7/02** *(2021.01)*
**G02B 13/08** *(2006.01)*

(52) Classification Coopérative des Brevets (CPC):
**B60Q 1/247; F21S 41/143; F21S 41/255; F21S 41/295; F21S 45/10; G02B 7/021; G02B 7/028; G02B 7/08**

(86) Numéro de dépôt international:
**PCT/EP2022/069327**

(87) Numéro de publication internationale:
**WO 2023/285384 (19.01.2023 Gazette 2023/03)**

(54) **MODULE LUMINEUX DE VÉHICULE AUTOMOBILE COMPRENANT UN ORGANE DE MAINTIEN DE L'OPTIQUE DE PROJECTION**

KRAFTFAHRZEUGLICHTMODUL MIT EINEM ELEMENT ZUR HALTERUNG DER PROJEKTIONSLINSE

MOTOR VEHICLE LIGHT MODULE COMPRISING A MEMBER FOR HOLDING THE PROJECTION LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2021 FR 2107569**

(43) Date de publication de la demande:
**22.05.2024 Bulletin 2024/21**

(73) Titulaire: **Valeo Vision**
**93012 Bobigny Cedex (FR)**

(72) Inventeurs:
• **SACCHET, Dirkie**
**7822 MESLIN L'EVEQUE (BE)**

• **DINANT, Franck**
**7822 MESLIN L'EVEQUE (BE)**
• **MUDRY, Emeric**
**7822 MESLIN L'EVEQUE (BE)**
• **DEBERT, Florestan**
**7822 MESLIN L'EVEQUE (BE)**

(74) Mandataire: **Valeo Visibility**
**IP department**
**34, rue Saint André**
**93012 Bobigny Cedex (FR)**

(56) Documents cités:
DE-A1- 102017 106 864      FR-A1- 3 062 613
FR-A1- 3 104 680      JP-A- 2021 076 621
KR-A- 20130 101 734      US-A1- 2019 204 528

**Description**

La présente invention concerne un module lumineux destiné à être intégré dans un dispositif lumineux pour véhicule automobile.

De manière connue, les dispositifs lumineux chauffent au cours de leur utilisation à cause de la chaleur dégagée par des sources de lumière qui y sont présentes. La température à l'intérieur du dispositif lumineux s'élève, ce qui peut avoir un impact sur des éléments contenus dans ce dispositif. Par exemple, il est fréquent que des lentilles logées dans le dispositif lumineux, lorsque celui-ci est utilisé pour projeter un faisceau lumineux, se dilatent avec l'augmentation de la température.

La dilatation thermique des lentilles peut causer le déplacement du foyer, ou du plan focal, associé à ces lentilles. Dans le cas où le dispositif lumineux est conçu pour projeter un motif, le plan focal décalé ne se trouve plus au niveau du motif. L'image projetée perd donc sa netteté. En d'autres termes, la qualité de l'image projetée est compromise. Ce phénomène est encore appelé la défocalisation.

Afin de remédier à ce problème, les lentilles sont fabriquées à partir du verre, un matériau qui est thermiquement stable et résiste bien à l'augmentation de la température. Toutefois, ces lentilles ont un poids élevé et coûtent cher. De plus, la fabrication des lentilles en verre est complexe. En effet, pour un usage dans l'éclairage d'un véhicule automobile, une portion des lentilles en verre est souvent réalisée en plastique, ce qui nécessite un surmoulage sur du verre et complique le procédé de fabrication.

Une autre solution proposée est d'installer la ou les lentilles dans un élément de support qui résiste bien à la température élevée pour empêcher la dilatation des lentilles. Précisément, l'élément de support serre le pourtour de la lentille ou de l'ensemble des lentilles. Il reste ainsi figé malgré la croissance de la température et applique une contrainte sur la lentille ou sur l'ensemble de lentilles de sorte qu'elles ne puissent pas se dilater. Toutefois, cette contrainte localisée sur le pourtour des lentilles déplace la déformation due à la dilatation thermique à une zone libre de contraintes, notamment la zone centrale où il y a la surface optique des lentilles. En conséquence, la surface optique est déformée de manière plus importante que lorsqu'il n'y a pas d'élément de support. Cette déformation est difficile à contrôler et peut avoir des conséquences aléatoires sur l'emplacement du plan focal.

Des modules lumineux connus sont divulgués dans les documents DE 102017106654 A, US 2019/204528 A et JP 2021076621 A.

Compte tenu de ce qui précède, un objectif de l'invention est de concevoir un module lumineux, destiné à monter dans un dispositif lumineux, qui réduit, voire supprime, le problème de la défocalisation due à la dilatation thermique des éléments optiques. Un tel module lumineux satisfait également l'exigence en matière de coût de fabrication et de poids tout en étant simple à mettre en œuvre.

Avec cet objectif en vue, l'invention propose un module lumineux comprenant :

- un socle fixe destiné à servir de support d'une source de lumière;
- une optique de projection présentant un plan focal et agencé pour projeter un faisceau lumineux à partir des rayons lumineux émis par la source de lumière;
- un organe de maintien de l'optique de projection, ledit organe comprenant :

  - un premier élément de support;
  - un deuxième élément de support servant de support pour l'optique de projection.

Selon l'invention, le deuxième élément de support est agencé de manière à permettre la dilatation thermique de l'optique de projection provoquant le déplacement du plan focal selon une première direction.

En outre, le premier élément de support présente un premier coefficient de dilatation thermique, le deuxième élément de support présentant un deuxième coefficient de dilatation thermique différent du premier coefficient de dilatation thermique. Enfin, le premier élément de support est relié d'une part au socle fixe et d'autre part au deuxième élément de support de manière à déplacer le deuxième élément de support durant la déformation du premier élément de support selon une deuxième direction opposée à la première direction.

Ici, le socle fixe sert de référentiel. Il ne réagit pas ou très peu à la variation de la température dans le module lumineux. A titre d'exemple, le socle fixe peut être réalisé en un matériau inerte, insensible à la température. Le deuxième élément de support porte l'optique de projection. Par exemple, le deuxième élément de support comprend un logement dans lequel est installé l'optique de projection. Enfin, le premier élément de support fait office de pièce intermédiaire entre le socle fixe et le deuxième élément de support.

Dans le module lumineux proposé, l'optique de projection est libre à se déformer par dilatation thermique en raison de l'augmentation de la température à l'intérieur du module lumineux. Le déplacement du plan focal causé par cette déformation est compensé par l'organe de maintien.

En effet, étant donné que l'organe de maintien ne fait pas obstacle à la dilatation de l'optique de projection, le plan focal peut se mouvoir dans un périmètre défini. Cependant, le deuxième élément de l'organe de maintien est conçu pour orienter le déplacement du plan focal dans une direction donnée. En parallèle, l'organe de maintien est également déformé, sous l'effet de la température, de façon à déplacer l'optique de projection dans un sens contraire au sens de déplacement du plan focal.

En conséquence, le plan focal se trouve proche ou au voisinage de l'emplacement qu'il avait avant l'augmentation de la température en dépit de son déplacement causé par la dilatation thermique de l'optique de projection. En d'autres termes, le phénomène de défocalisation est compensé dans le module lumineux proposé.

Ainsi, l'image projetée reste toujours nette pour une bonne qualité d'image, quelle que soit la durée de fonctionnement du module lumineux.

Par ailleurs, le module lumineux étant capable de compenser la défocalisation à cause de la dilatation thermique, il est envisageable d'utiliser un matériau constitutif de l'optique de projection qui est sensible à la variation de la température, mais en contrepartie qui présente un coût peu élevé. A titre d'exemple, l'optique de projection peut être réalisé en Polycarbonates (PC), en Polyméthacrylate de méthyle (PMMA), en polymère cyclo-oléfinique (PCO), par exemple de la marque Zeonex®. Néanmoins, l'organe de maintien proposé est tout à fait adapté à une optique de projection en verre.

Dans le présent document, l'optique de projection crée une image réelle, et éventuellement anamorphosée, d'une partie du module, par exemple la source elle-même, ou d'une image intermédiaire de la source, à distance (finie ou infinie) très grande devant les dimensions du module (d'un rapport de l'ordre d'au moins 30, de préférence 100). Cette optique de projection peut consister en un ou plusieurs réflecteurs, ou bien en une ou plusieurs lentilles, ou un ou plusieurs guides de lumière ou encore en une combinaison de ces possibilités.

Le module lumineux selon l'invention peut optionnellement présenter une ou plusieurs des caractéristiques suivantes :

- lorsque la température varie la température varie d'une valeur initiale à une valeur finale, la dilatation thermique de l'optique de projection provoque le déplacement du plan focal sur une première distance, et la déformation du premier élément de support fait déplacer le deuxième élément de support sur une deuxième distance ; en outre, le premier coefficient de dilatation thermique et le deuxième coefficient de dilatation thermique sont définis de manière à ce que la première distance soit sensiblement égale à la deuxième distance ; par « sensiblement égale », on entend que la deuxième distance peut être égale ou légèrement inférieure à la première distance ; ainsi, en plus des déplacements contraires, l'optique de projection et le plan focal sont déplacés approximativement sur une même distance ; le déplacement de chacun parmi l'optique de projection et le plan focal est caractérisé par un sens et par une valeur comme un vecteur ; dans le cas où les distances sont égales, le vecteur caractérisant le déplacement de l'optique de projection et le vecteur caractérisant le déplacement du plan focal sont ici deux vecteurs opposés qui s'annulent ; ainsi, le plan focal est maintenu à un emplacement désiré dans le module lumineux ; ici, par « emplacement désiré », on entend l'endroit où lorsque le plan focal s'y trouve, l'image projetée par le module lumineux présente une bonne netteté et luminance ;

- le premier élément de support est en contact avec le socle fixe à une première zone de contact et en contact avec le deuxième élément de support à une deuxième zone de contact située à l'opposé de la première zone de contact ; en d'autres termes, le premier élément de support comprend une extrémité fixe par sa liaison avec le socle fixe et une extrémité libre par sa liaison avec le deuxième élément de support ; de cette manière, lorsque la température dans le module lumineux varie, la déformation structurelle du premier élément de support se produit au niveau de la deuxième zone de contact, ou l'extrémité libre, de celui-ci ; ici, on entend par « déformation structurelle » la modification d'une dimension du premier élément de support consistant par exemple à un allongement ou à un raccourcissement de celui-ci ; par ailleurs, la structure du premier élément de support est simple et facile à réaliser tout étant efficace pour compenser le déplacement du plan focal de l'optique de projection ;

- la première zone de contact entre le premier élément de support et le socle fixe peut comprendre au moins une portion qui est située sensiblement au même niveau que la première face de la diapositive ; ainsi, la longueur de travail en dilatation thermique du premier élément est maximisée; bien entendu, d'autres portions de la première zone de contact ne se situent pas nécessairement au même niveau que la première face de la diapositive ;

- l'optique de projection présente un premier côté orienté vers la source de lumière, le deuxième élément de support soutenant l'optique de projection au niveau du premier côté ;

- l'optique de projection comprend une zone centrale réalisant une fonction optique, et une zone périphérique entourant la zone centrale, le deuxième élément de support étant agencé de manière à épouser au moins partiellement la zone périphérique ; ceci permet une bonne saisie de l'optique de projection par le deuxième élément de support ;

- l'optique de projection présente un deuxième côté opposé au premier côté , le deuxième élément de support comprenant un organe déformable élastiquement prenant appui sur le deuxième côté de l'optique de projection ; ainsi, en temps normal, l'organe déformable élastiquement assure un bon maintien de l'optique de projection par le deuxième élément de support ; en revanche, lors de l'augmentation de la température, cet organe se déforme ce qui rend possible la dilatation de l'optique de projection ;

- le deuxième élément de support comprend deux pièces distinctes ;

- selon un exemple, le deuxième élément de projection comprend une première partie et une deuxième partie qui s'emmanchent l'une dans l'autre de façon à former un espace de logement pour l'optique de projection l'une des deux parties supportant l'optique de projection au niveau d'un premier côté de l'optique de projection et l'autre partie comprenant l'organe déformable élastiquement prenant appui sur l'optique de projection au niveau d'une deuxième côté opposé au premier côté;
- par exemple, la première partie et la deuxième partie sont des cylindres creux conçus pour s'emmancher l'un dans l'autre de manière à former un espace d'accueil de l'optique de projection ; la première partie est destinée à supporter l'optique de projection au niveau de la première extrémité située du côté du socle fixe, la deuxième partie est emmanchée partiellement dans la première partie ; et la portion non-emmanchée de la deuxième partie comprend un bord rabattu vers l'intérieur de l'espace d'accueil de manière à former un organe déformable élastiquement ; le bord rabattu prend appui sur la deuxième extrémité de l'optique de projection ;
- alternativement, le deuxième élément de support est réalisé en une seule pièce ; à titre d'exemple, le deuxième élément de support comprend un corps cylindrique creux avec une paroi annulaire et une collerette faisant saillie radialement de cette paroi ; la collerette est destiné à s'appuyer sur une extrémité du premier élément de support ; la collerette peut être solidarisée avec le premier élément de support par une couche d'adhésive interposée entre ces deux éléments ;
- les premier et deuxième éléments de support sont reliés l'un à l'autre par collage ou par encliquetage ; à titre d'exemple, la fixation par collage consiste à utiliser un adhésif réticulé au rayonnement ultra-violet ; bien évidemment, d'autres moyens de fixation peuvent être envisagés ;
- le module lumineux comprend une diapositive disposée en amont de l'optique de projection selon le sens de propagation des rayons lumineux dans le module lumineux, la diapositive présentant une première face portant un motif à projeter et orientée vers l'optique de projection, et l'emplacement désiré du plan focal étant sur ladite première face ou au voisinage de ladite première face ; dans la présente demande, par « au voisinage de/du », on entend un emplacement du plan focal à distance de la première face tel que le rayon partant de la source lumineuse ressorte sensiblement parallèle à l'axe optique de l'optique de projection ; cette distance est par exemple égale à un dixième de la distance focale de l'optique de projection ; ainsi, le plan focal se situe toujours au niveau de la première face de la diapositive et au voisinage de celle-ci de façon à assurer une netteté de la projection du motif ;
- alternativement, dans un exemple où le module lumineux est dépourvu de diapositive, l'emplacement désiré du plan focal se trouve sur la source de lumière ; ainsi, l'optique de projection projette l'image de la source de lumière ;
- selon un exemple de réalisation, le socle fixe sert également de support pour la diapositive ; ainsi, la source de lumière et la diapositive sont d'emblée bien positionnées l'une par rapport à l'autre, ce qui simplifie le montage ;
- le deuxième coefficient de dilatation thermique est inférieur au premier coefficient de dilatation thermique ; dans le présent document, les coefficients de dilatation thermique sont les coefficients de dilatation thermiques linéaires en Kelvins puissance moins un ($K^{-1}$) ;
- selon un exemple, le premier élément de support est réalisé à partir d'un matériau dont le coefficient de dilatation thermique est compris entre $90 \times 10^{-6}\,K^{-1}$ et $180 \times 10^6\,K^{-1}$, de préférence entre $100 \times 10^6\,K^{-1}$ et $150 \times 10^6\,K^{-1}$;
- le premier élément de support est réalisé à partir du polyamide ;
- le deuxième élément de support est réalisé à partir d'un matériau dont le coefficient de dilatation thermique est compris entre $12 \times 10^{-6}\,K^{-1}$ et $30 \times 10^6\,K^{-1}$, de préférence entre $15 \times 10^{-6}\,K^{-1}$ et $24 \times 10^{-6}\,K^{-1}$ ;
- le deuxième élément de support est réalisé d'un matériau choisi parmi l'aluminium et l'acier ;
- l'optique de projection présente un coefficient de dilatation thermique supérieur au coefficient de dilatation thermique du deuxième élément de support ;
- l'optique de projection comprend plusieurs lentilles qui sont empilées les unes sur les autres ; par exemple, le nombre de lentilles peut être compris entre 2 et 6 ;optionnellement, l'optique de projection comprend quatre lentilles ; ces quatre lentilles peuvent être réalisées d'un même matériau choisi parmi le verre ou le plastique, ou encore il s'agit d'une combinaison de lentilles en verre et de lentilles en plastique;
- le module lumineux comprend en outre une source de lumière et un collimateur disposé en aval de la source de lumière selon le sens de propagation des rayons lumineux issus de la source de lumière, le collimateur comprenant une face amont disposée en regard de la source de lumière et une face aval disposée en regard de la diapositive ; ainsi, le faisceau lumineux sortant du collimateur est composé de rayons parallèles dirigés en direction de l'optique de projection ; le collimateur permet donc de limiter la dispersion des rayons lumineux émis par la source de lumière ;
- lorsque le module lumineux est intégré dans un dispositif lumineux, le socle fixe est relié à un boîtier de ce dispositif ;

L'invention a également pour objet un dispositif lumineux de véhicule automobile comprenant un module lumineux selon l'invention.

A titre d'exemple, le dispositif lumineux assure une fonction auxiliaire d'éclairage de l'espace situé de part et d'autre du véhicule.

Selon un mode de réalisation, le dispositif lumineux comprend un boîtier. Le socle fixe est relié au boîtier par des moyens de fixation adaptés.

D'autres caractéristiques et avantages innovants ressortiront de la description ci-après, fournie à titre indicatif et nullement limitatif, en référence aux dessins annexés, dans lesquels :

[Fig.1] représente une vue de côté d'un véhicule automobile comprenant un module lumineux selon un exemple de réalisation de l'invention ;

[Fig.2] représente une vue en coupe du module lumineux de la [Fig.1] ;

[Fig.3] représente une vue en coupe détaillée du module lumineux de la [Fig.1] ;

[Fig.4] représente une vue éclatée du module lumineux illustré à la [Fig.3].

[Fig.5] représente une illustration schématique du module lumineux à la température ambiante T0 (figure 5A) et à une première température T1 supérieure à la température ambiante (figure 5B).

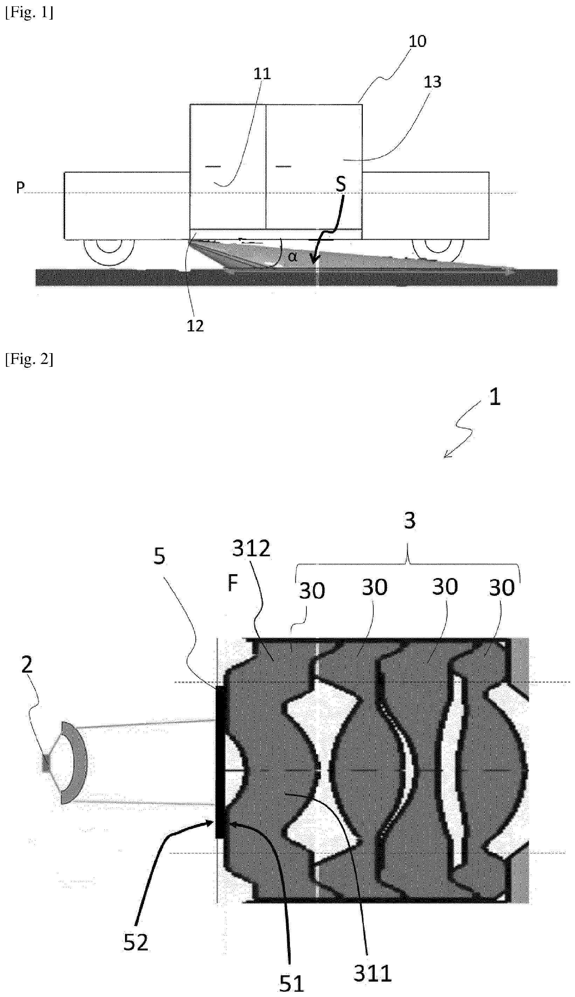

En référence à ces figures, notamment à la [Fig.1], un véhicule automobile 10 comprend, sur le côté gauche illustré, une porte avant 11 et une porte arrière 13. Un dispositif lumineux comportant un module lumineux 1 (pas visible sur la [Fig.1]) est installé dans un seuil de porte 12 situé sous les portes avant 11 et arrière 13. Dans l'exemple illustré, le dispositif lumineux est situé à l'extrémité avant du seuil de porte 12 et est agencé pour projeter au sol un champ d'éclairage S qui s'étend parallèlement à l'axe principal P du véhicule 10 et jusqu'à l'arrière du véhicule 10. L'axe de projection forme un angle $\alpha$ avec un axe horizontal.

Le dispositif lumineux sert de moyen d'éclairage latéral de l'espace situé à côté des portes d'entrée avant et arrière.

Sur la [Fig.2], le module lumineux 1 comprend une source de lumière 2, une optique de projection 3 et une diapositive 5 disposée entre la source de lumière 2 et l'optique de projection 3.

La source de lumière 2 est ici une diode électroluminescente (DEL ou LED- l'abrégé du terme anglo-saxon : light-emitting diode). D'autres types de sources de lumière sont envisageables. La source de lumière 2 peut comprendre une ou plusieurs diodes à électroluminescence.

Dans l'exemple illustré, l'optique de projection 3 présente un plan focal F et elle est composée d'une pluralité de lentilles 30 qui sont empilées les unes contre les autres. Les lentilles sont ici au nombre de quatre.

Chacune des lentilles 30 comprend une zone centrale 311 avec des surfaces dioptriques réalisant une fonction optique et une zone périphérique 312 entourant la zone centrale 311. Les surfaces dioptriques sont paramétrées pour projeter les rayons issus de la source de lumière 2 tout en limitant des aberrations optiques, telles que la distorsion. L'optique de projection 3 est ci-après appelée l'ensemble 3 de lentilles.

La zone périphérique 312 est pourvue des moyens d'engagement destinés à coopérer avec des moyens d'engagement complémentaire de la zone périphérique de la lentille adjacente. A titre d'exemple, des moyens d'engagement peuvent comprendre une rainure ou une nervure.

La diapositive 5 est ici une plaque transparente 53 ayant, à titre illustratif, une section carrée. La diapositive 5 peut être en verre, par exemple en verre borosilicate, ou en plastique, par exemple en Polytéréphtalate d'éthylène (PET).

La diapositive 5 présente une première face 51 et une deuxième face 52. La diapositive est placée dans le module lumineux 1 de façon que la première face 51 soit orientée vers l'ensemble 3 de lentilles et que la deuxième face 52 soit orientée vers la source de lumière 2. La première face 51 est encore appelée la face avale et la deuxième face 52 la face amont. Les termes « amont » et « aval » sont définis selon le sens de propagation de lumière dans le module lumineux 1.

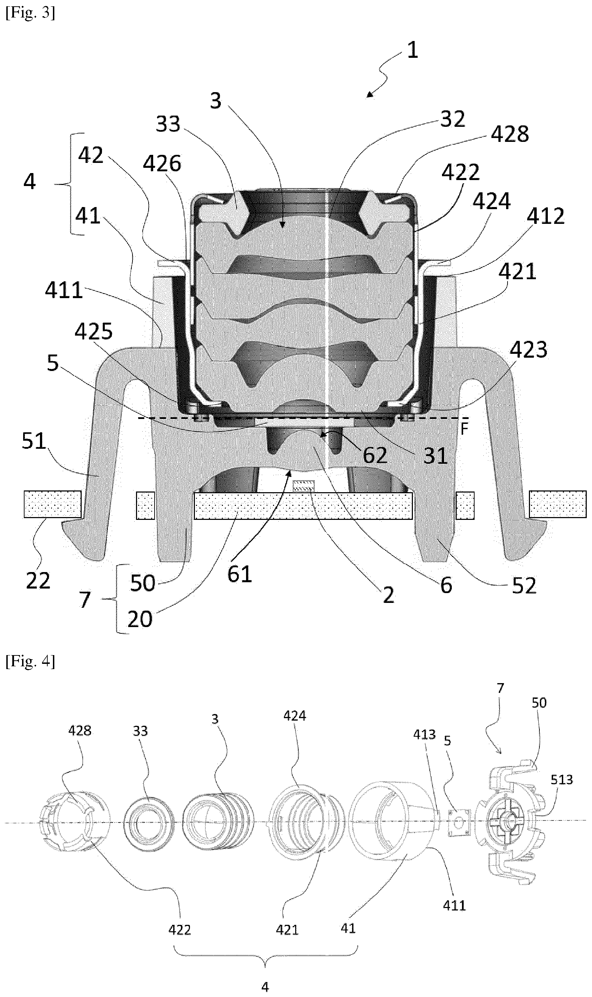

Les figures 3 et 4 illustrent de façon plus détaillée le module lumineux 1 en montrant des éléments supplémentaires du module lumineux 1, notamment un organe de maintien 4 et un socle fixe 7.

Dans l'exemple illustré, le socle fixe 7 sert de support pour la source de lumière 2 et pour la diapositive 5. Ici, le socle fixe 7 comprend une base 20 sur laquelle est montée la source de lumière 2. La base 20 peut être une carte à circuit imprimé (encore appelée PCB, l'abrégé du terme anglo-saxon : Printed circuit board).

Le socle fixe comprend en outre un bâti 50 portant la diapositive 5 et un collimateur 6 placé entre la source de lumière 2 et la diapositive 5. Ici, le collimateur 6 fait partie intégrante du bâti 50. Le collimateur 6 comprenant une face amont 61 disposée en regard de la source de lumière 2 et une face aval 62 disposée en regard de la diapositive 5.

Dans cet exemple, le bâti 50 est solidaire de la base 20 moyennant deux pattes de fixation 51 et deux pions 52. Précisément, les pattes de fixation 51 sont en butée contre une face secondaire 22 de la base 20 tandis que les pions 52 sont engagés dans les trous correspondants réalisés dans la base 20. De cette manière, la base 20 et le bâti 50 forment un bloc constituant le socle fixe 7.

L'optique de projection 3 est reliée au socle fixe 7 par l'intermédiaire de l'organe de maintien 4. Ici, l'organe de maintien 4 sert à la fois comme support de lentilles 30 et comme moyen de positionnement des lentilles par rapport à la diapositive 5.

Selon l'invention et comme dans l'exemple illustré, l'organe de maintien 4 comprend un premier élément de support 41 et un deuxième élément de support 42.

Le premier élément de support 41 est la pièce intermédiaire qui relie le socle fixe 7 au deuxième élément de support 42. De manière précise, le premier élément de support 41 est ici formé d'un manchon cylindrique interposé entre le socle fixe 7 et le deuxième élément de support 42. Ledit premier élément est encore appelé un barillet dans le vocabulaire de l'homme du métier. Le premier élément de support 41 comprend des pattes d'engagement 412 qui sont prévues à être insérées dans des gorges 513 pratiquées dans le socle fixe 7 pour assembler ces deux éléments.

Une fois assemblé, le premier élément de support 41 est en contact avec le socle fixe 7 au niveau de sa première extrémité 411 orientée vers le socle fixe 7. La première extrémité 411 est encore appelée la première zone de contact 411.

Ici, la première zone de contact 411 comprend plusieurs portions de contact. Certaines d'entre elles sont situées au même niveau que la première face 51 de la diapositive 5. Certaines d'autres se trouvent à un niveau plus élevé que la diapositive, notamment les portions de contact entre le premier élément de support 41 et l'épaulement des pattes de fixation 51 du bâti 50. Autrement dit, la liaison entre la première zone de contact 411 et la première face 51 peut être réalisée sur différents niveaux.

Dans l'exemple illustré, le premier élément de support 41 est relié au deuxième élément de support 42 au niveau de sa deuxième extrémité 412 située à l'opposé de la première extrémité 411. Ici, le premier élément de support 41 est en contact avec le deuxième élément de support 42 par l'intermédiaire d'une couche de colle qui relie ces deux éléments entre eux. D'autres moyens de liaison peuvent être envisagés. L'assemblage par collage entre le premier élément de support 41 et le deuxième élément de support 42 permet de régler facilement la position du plan focal F de l'ensemble 3 de lentilles par rapport à la diapositive 5.

Ici, le deuxième élément de support 42 comprend deux parties distinctes qui s'emmanchent l'une dans l'autre de façon à former un espace de logement pour l'ensemble 3 de lentilles. Le deuxième élément de support 42 est encore appelé la boîte de lentilles.

Précisément, la première partie 421 comprend un corps cylindrique creux qui est ouvert des deux côtés. Néanmoins, l'ouverture d'un des côtés est moins large que celle de l'autre côté. Précisément, le premier côté de la première partie 421, celui qui est orienté en direction de la source de lumière, comprend un bord rabattu vers l'intérieur de sorte à créer un siège annulaire 423. Ici, le siège annulaire 423 présente une forme complémentaire à la forme de la zone périphérique 311 de la lentille 30 qui est en contact direct avec ce siège. De cette manière, le siège annulaire 423 épouse parfaitement la zone périphérique 311 pour assurer un bon maintien entre la première partie 421 et la lentille 30. Le siège annulaire 423 délimite une première ouverture 425 dont le diamètre correspond au diamètre de la zone centrale 312 des lentilles 30.

Le deuxième côté de la première partie 421, opposé au premier côté, comprend une collerette 424 qui repose sur la deuxième extrémité 412 du premier élément de support 41 et qui y est fixée par des moyens adaptés, par exemple par une colle réticulable aux rayons ultraviolets, une colle thermique ou la combinaison de ces deux types de colles. La collerette 424 définit une deuxième ouverture 426 présentant un diamètre supérieur au diamètre de la première ouverture 425. La deuxième ouverture 426 est prévue suffisamment large pour recevoir la deuxième partie 422 du deuxième élément de support 42.

Ici, la deuxième partie 422 comprend également un corps cylindrique creux et traversant. La deuxième partie 422 est emmanchée partiellement dans la première partie 421. L'extrémité libre, c'est-à-dire l'extrémité non emmanchée, de la deuxième partie 422 comprend un bord 428 rabattu vers l'intérieur et qui prend appui sur un diaphragme 33. Ce dernier fait partie de l'ensemble 3 de lentilles et comprend une ouverture qui définit la surface optique de l'ensemble 3 de lentilles.

La deuxième partie 422 est conçue de façon que le bord rabattu 428 présente un comportement de déformation élastique, c'est-à-dire que le bord 428 tend à revenir à sa position initiale lorsqu'il est déformé. Ici, la deuxième partie 422 présente une épaisseur suffisamment faible pour donner le comportement élastique au bord 428. Le bord 428 tel que représenté sur la [Fig.3] est dans sa position initiale dans laquelle il s'appuie sur le diaphragme 33. Cet appui s'ajoute au contact du siège annulaire 423 avec l'ensemble 3 de lentilles de l'autre côté pour serrer cet ensemble 3 en supprimant le jeu entre les lentilles 30.

La deuxième partie 422 ainsi conçue est encore appelée l'organe déformable élastiquement. De plus, la déformation élastique du bord 428 permet à l'ensemble 3 de lentilles de se dilater dans le cas où la température du module lumineux augmente. En effet, le bord 428 est soulevé sous l'effet de la poussée de l'ensemble 3 de lentilles quand celui-ci se dilate.

Une fois que la première partie 421 et la deuxième partie 422 sont assemblées, ces deux parties forment un boîtier dans lequel est logé l'ensemble 3 de lentilles. Ledit boîtier constitue le deuxième élément de support 42.

Dans l'exemple illustré, chacun parmi l'ensemble 3 de lentilles, le premier élément de support 41 et le deuxième élément 42 est sujet à une expansion lorsque la température varie. Ici, chacun de ces éléments est réalisé à partir d'un matériau dont le coefficient de dilatation thermique est positif, c'est-à-dire que ces éléments se dilatent et leur taille augmente lorsque la température augmente. Cependant, les coefficients de dilatation thermique de ces éléments sont différents, et ce de manière à contribuer avec le montage décrit précédemment à limiter la défocalisation de l'optique de projection. En d'autres termes, l'agencement du module lumineux décrit plus haut et la composition différente de certains éléments dans ce module lumineux permettent de maintenir le plan focal F à un emplacement désiré, ici sensiblement au niveau de la première face 51 de la diapositive 5, malgré l'augmentation de la température dans le module.

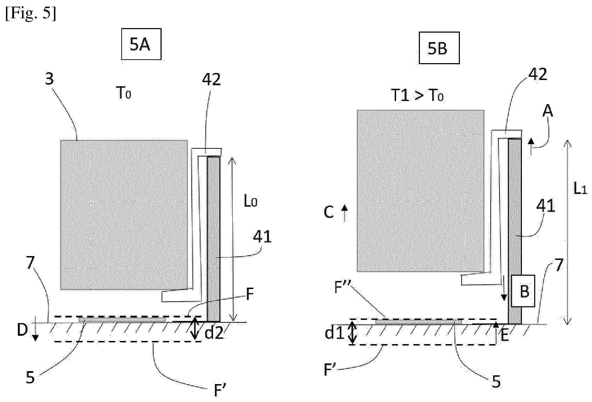

Nous allons expliquer en détail le principe de fonctionnement du concept présenté à l'appui de la [Fig.5].

La [Fig.5] comporte une première figure 5A illustrant le module lumineux 1 à la température ambiante T0 et une deuxième figure 5B illustrant le module lumineux 1 à une température T1 supérieure à la température ambiante T0. Comme observé sur ces figures, l'ensemble 3 de lentilles, le premier élément de support 41 et le deuxième élément de support 42 changent de dimensions et/ou de position en passant de la température ambiante T0 à la température plus élevée T1 alors que le plan focal F est maintenu au même endroit dans les deux cas.

Dans l'exemple illustré, le premier élément de support 41 est fait d'un matériau présentant un premier coefficient de dilatation thermique $\alpha 1$. Le deuxième élément de support 42 est fait d'un matériau présentant un deuxième coefficient de dilatation thermique $\alpha 2$. L'ensemble 3 de lentilles présente un troisième coefficient de dilatation thermique $\alpha 3$. Ici, ces coefficients sont classés dans l'ordre décroissant de leur valeur comme suit :

- le premier coefficient de dilatation thermique $\alpha 1$ ;
- le troisième coefficient de dilatation thermique $\alpha 3$ ; et
- le deuxième coefficient de dilatation thermique $\alpha 2$.

Si l'organe de maintien 4 n'avait pas été présent, la dilatation de l'ensemble 3 de lentilles due à une augmentation de la température dans le module aurait fait déplacer le plan focal F en direction du socle fixe 7 selon la flèche D illustrée sur la figure 5A jusqu'à atteindre la position du plan focal F' illustré sur la figure 5A à la température T1. A noter que la position finale du plan focal F dus à la dilatation de l'ensemble 3 de lentilles en l'absence de l'organe de maintien 4 est représentée sur la figure 5A pour faciliter la compréhension et n'est pas liée à la situation de la figure 5A à la température ambiante $T_0$.

La distance de déplacement du plan focal F, dit deuxième distance d2, dépend de la variation de la température :

$$d2 = f(\Delta T)$$

avec, ici : $\Delta T = T1 - T0$.

Dans le module lumineux de l'exemple illustré, lorsque la température augmente, l'ensemble 3 de lentilles, disposé dans l'organe de maintien 4, se dilate dans une direction opposée au socle fixe 7 comme représenté par la flèche C illustrée sur la figure 5B. Cette dilatation est possible grâce à la configuration du deuxième élément de support 42 avec l'organe déformable élastiquement 422 décrit précédemment. En outre, puisque le deuxième élément de support 42 présente un coefficient de dilatation thermique $\alpha 2$ inférieur à celui ($\alpha 3$) de l'ensemble 3 de lentilles, ledit deuxième élément contraint l'ensemble 3 à se dilater plus dans un sens que dans l'autre. Ici, l'ensemble 3 se dilate plus du côté de la deuxième partie 422 que du côté de la première partie. De plus, quand la température baisse, le deuxième élément de support 42 se contracte plus que l'ensemble 3 de lentilles afin d'assurer un bon serrage de l'ensemble 3.

La dilatation de l'ensemble 3 des lentilles provoque le déplacement du plan focal F. En pratique et à titre non limitatif, le déplacement du plan focal F, à une variation de température donnée, est calculé par une simulation thermo-optique en utilisant la surface d'appui entre le premier élément et le socle fixe comme point de référence. Ce calcul peut être fait pour chaque point de la plage de température de fonctionnement.

Connaissant le comportement de l'ensemble 3 des lentilles ainsi que le déplacement du plan focal, les premier et deuxième éléments 41 et 42 sont conçus pour positionner plan focal F au niveau de la première face 51 de la diapositive malgré la dilatation. Précisément, la différence entre le coefficient de dilatation thermique du premier élément 41 ($\alpha 1$) et celui du deuxième élément 42 ($\alpha 2$) doit être suffisamment grande pour déplacer l'ensemble 3 des lentilles dans un sens opposé du déplacement du plan focal F et d'une distance sensiblement égale à la distance de déplacement du plan focal F.

En effet, lorsque la température augmente à la valeur T1, le premier élément de support 41 s'allonge dans la direction opposée au socle fixe 7, représentée par la flèche A sur la figure 5B. La longueur du premier élément de support 41 évolue d'une valeur initiale L0 à température ambiante T0 à une valeur L1 plus élevée à la température T1.

Parallèlement, le deuxième élément de support 42 s'allonge en direction du socle fixe 7 représenté par la flèche B. Ici, c'est la première partie 421 qui s'allonge vers le socle fixe 7, car l'autre extrémité de la première partie est reliée au premier élément de support 41. L'allongement du deuxième élément de support 42 reflète la dilatation de l'ensemble 3 de lentilles. Le deuxième élément de support 42 présente un rôle de l'intermédiaire qui, d'une part, permet à l'ensemble 3 de se dilater et qui, d'autre part, est déplacée par la déformation du premier élément de support. Ce déplacement décale l'ensemble 3 de lentilles dans le sens contraire du mouvement du plan focal F. La valeur de la distance déplacée dépend des coefficients de dilatation thermique des premier et deuxième éléments de support 41 et 42.

En effet, il résulte de la déformation du premier élément de support 41 et du deuxième élément de support 42 que l'ensemble 3 de lentilles est déplacé dans la direction opposée au socle fixe 7, représenté par la flèche E, d'une première distance d1. Cette distance dépend de l'allongement de chacun des premier et deuxième éléments de support 41, 42 et de leur coefficient de dilatation thermique respectif :

$$d1 = (\alpha1 - \alpha2) \times L0 \times \Delta T$$

avec ici : $L_0$ : la longueur initiale du premier élément de support 41 ;

$$\Delta T = T1 - T0$$

Le plan focal F associé à l'ensemble 3 de lentilles, est déplacé de la même manière que cet ensemble, c'est-à-dire dans la direction opposée au socle fixe 7 et d'une valeur de la première distance d1.

Ainsi, afin d'avoir le plan focal F positionné relativement proche de l'emplacement initial, voire au même endroit qu'avant l'augmentation de la température, la montée de l'ensemble 3 de lentilles doit compenser le déplacement du plan focal F dû au phénomène de la dilatation.

Autrement dit, en complément du fait que l'ensemble 3 des lentilles et le plan focal F se déplacent selon deux sens opposés, la première distance d1 et la deuxième distance d2 doivent être sensiblement égale : dl= d2 (à +/- 10% près). Ceci est obtenu par un choix adéquat des premier et deuxième coefficients de dilatation thermique $\alpha1$ et $\alpha2$.

Le résultat obtenu est illustré sur la figure 5B. La montée de l'ensemble 3 de lentilles fait remonter le plan focal F' à la position F" qui est au même emplacement du plan focal F à la température ambiante. Bien entendu, la position F" peut ne pas être exactement sur l'emplacement initial mais elle est dans ce cas proche de cet emplacement initial de façon à assurer une bonne qualité de l'image projetée par le module lumineux.

Par conséquent, le module lumineux 1 tel que décrit résout le problème de défocalisation rencontré lorsque la température dans le module augmente. Le plan focal étant maintenu à la première face de la diapositive, la projection du motif s'affiche de manière nette durant l'utilisation du module, quelle que soit la durée.

## Revendications

1. Module lumineux (1) comprenant :

   - un socle fixe (7) destiné à servir de support d'une source de lumière (2) ;
   - une optique de projection (3) présentant un plan focal (F) et agencé pour projeter un faisceau lumineux à partir des rayons lumineux émis par la source de lumière (2);
   - un organe de maintien (4) de l'optique de projection (3), ledit organe comprenant :

     ■ un premier élément de support (41);
     ■ un deuxième élément de support (42) servant de support pour l'optique de projection ;

   dans lequel :

   - le deuxième élément de support (42) est agencé de manière à permettre la dilatation thermique de l'optique de projection (3) provoquant le déplacement du plan focal (F) selon une première direction (D);
   - le premier élément de support (41) présente un premier coefficient de dilatation thermique ($\alpha1$), le deuxième élément de support présentant un deuxième coefficient de dilatation thermique ($\alpha2$) différent du premier coefficient de dilatation thermique; et
   - le premier élément de support (41) est relié d'une part au socle fixe (7) et d'autre part au deuxième élément de support (42) de sorte à déplacer le deuxième élément de support (42) durant la déformation du premier élément de support (41) selon une deuxième direction (C) opposée à la première direction (D) ;

   **caractérisé en ce que** :

   - le deuxième élément de support (42) comprend deux pièces distinctes (421, 422) ;
   - le deuxième élément de support (42) comprend une première partie (421) et une deuxième partie (422) qui s'emmanchent l'une dans l'autre de façon à former un espace de logement pour l'optique de projection (3), l'une des deux parties supportant l'optique de projection au niveau d'un premier côté (31) de l'optique de projection et l'autre partie comprenant un organe déformable élastiquement prenant appui sur l'optique de projection au niveau d'un deuxième côté (32) opposé au premier côté (31).

2. Module lumineux selon la revendication 1, **caractérisé en ce que**:

   - lorsque la température varie d'une valeur initiale (T0) à une valeur finale (T1) :

     ■ la dilatation thermique de l'optique de projection (3) provoque le déplacement du plan focal (F) sur une première distance (d1), et
     ■ la déformation du premier élément de support (41) fait déplacer le deuxième élément de support sur une deuxième distance (d2) ;

et dans lequel le premier coefficient de dilatation thermique ($\alpha$1) et le deuxième coefficient de dilatation thermique ($\alpha$2) sont définis de manière à ce que la première distance (d1) soit sensiblement égale à la deuxième distance (d2).

3. Module lumineux selon la revendication 1 ou selon la revendication 2, **caractérisé en ce que** le deuxième coefficient de dilatation thermique ($\alpha$2) est inférieur au premier coefficient de dilatation thermique ($\alpha$1).

4. Module lumineux selon la revendication 1, **caractérisé en ce que** le premier élément de support (41) est en contact avec le socle (7) à une première zone de contact (411) et en contact avec le deuxième élément de support (42) à une deuxième zone de contact (412) située à l'opposé de la première zone de contact (411).

5. Module lumineux (1) selon l'une des revendications précédentes, **caractérisé en ce que** le premier côté (31) de l'optique de projection (3) est orienté vers la source de lumière (2).

6. Module lumineux (1) selon la revendication précédente, **caractérisé en ce que** l'optique de projection (3) comprend une zone centrale (311) réalisant une fonction optique, et une zone périphérique (312) entourant la zone centrale (311), le deuxième élément de support (42) étant agencé de manière à épouser au moins partiellement la zone périphérique (312).

7. Module lumineux (1) selon l'une des revendications précédentes, **caractérisé en ce que** les premier et deuxième éléments de support (41, 42) sont reliés l'un à l'autre par collage ou par encliquetage.

8. Module lumineux (1) selon l'une des revendications précédentes, **caractérisé en ce qu'**il comprend une diapositive (5) disposée en amont de l'optique de projection (3) selon le sens de propagation des rayons lumineux dans le module lumineux, la diapositive présentant une première face (51) portant un motif à projeter et orientée vers l'optique de projection, et l'emplacement désiré du plan focal (F) étant sur ladite première face ou au voisinage de ladite première face.

9. Module lumineux (1) selon la revendication précédente, **caractérisé en ce que** le socle fixe (7) sert également de support pour la diapositive (5).

10. Module lumineux (1) selon l'une des revendications précédentes, **caractérisé en ce que** l'optique de projection (3) comprend plusieurs lentilles (30) qui sont empilées les unes sur les autres.

11. Dispositif lumineux pour véhicule automobile, **caractérisé en ce qu'**il comprend un module lumineux selon l'une des revendications précédentes.

12. Dispositif lumineux selon la revendication précédente,
**caractérisé en ce qu'**il comprend un boîtier et **en ce que** le socle fixe (7) du module lumineux (1) est relié au boîtier

**Patentansprüche**

1. Lichtmodul (1), umfassend:

   - einen festen Sockel (7), der als Träger einer Lichtquelle (2) dient;
   - eine Projektionsoptik (3) mit einer Fokalebene (F), die angeordnet ist, um einen Lichtstrahl aus den von der Lichtquelle (2) emittierten Lichtstrahlen zu projizieren;
   - ein Halteorgan (4) der Projektionsoptik (3), wobei das Organ umfasst:

     • ein erstes Stützelement (41);
     • ein zweites Stützelement (42), das als Träger für die Projektionsoptik dient;

   wobei:

   - das zweite Stützelement (42) so angeordnet ist, dass es die thermische Ausdehnung der Projektionsoptik (3) ermöglicht, die die Verschiebung der Fokalebene (F) in einer ersten Richtung (D) verursacht;
   - das erste Stützelement (41) einen ersten thermischen Ausdehnungskoeffizienten ($\alpha$1) aufweist, wobei das zweite Stützelement einen zweiten thermischen Ausdehnungskoeffizienten ($\alpha$2) aufweist, der sich vom ersten thermischen Ausdehnungskoeffizienten unterscheidet; und
   - das erste Stützelement (41) einerseits mit dem festen Sockel (7) und andererseits mit dem zweiten Stützelement (42) verbunden ist, um das zweite Stützelement (42) während der Verformung des ersten Stützelements (41) in einer zweiten Richtung (C) zu verschieben, die der ersten Richtung (D) entgegengesetzt ist;

   **dadurch gekennzeichnet, dass**:

   - das zweite Stützelement (42) zwei unterschiedliche Teile (421, 422) umfasst;

- das zweite Stützelement (42) einen ersten Teil (421) und einen zweiten Teil (422) umfasst, die ineinander eingreifen, um einen Aufnahmeraum für die Projektionsoptik (3) zu bilden, wobei einer der beiden Teile die Projektionsoptik an einer ersten Seite (31) der Projektionsoptik trägt und der andere Teil ein elastisch verformbares Organ umfasst, das an einer zweiten Seite (32) der Projektionsoptik anliegt, die der ersten Seite (31) gegenüberliegt.

2. Lichtmodul nach Anspruch 1, **dadurch gekennzeichnet, dass**:

   - wenn die Temperatur von einem Anfangswert (T0) auf einen Endwert (T1) variiert:

      • die thermische Ausdehnung der Projektionsoptik (3) die Verschiebung der Fokalebene (F) um eine erste Distanz (d1) verursacht, und
      • die Verformung des ersten Stützelements (41) das zweite Stützelement um eine zweite Distanz (d2) verschiebt;

   und wobei der erste thermische Ausdehnungskoeffizient (α1) und der zweite thermische Ausdehnungskoeffizient (α2) so definiert sind, dass die erste Distanz (d1) im Wesentlichen gleich der zweiten Distanz (d2) ist.

3. Lichtmodul nach Anspruch 1 oder nach Anspruch 2, **dadurch gekennzeichnet, dass** der zweite thermische Ausdehnungskoeffizient (α2) kleiner als der erste thermische Ausdehnungskoeffizient (α1) ist.

4. Lichtmodul nach Anspruch 1, **dadurch gekennzeichnet, dass** das erste Stützelement (41) an einer ersten Kontaktzone (411) mit dem Sockel (7) in Kontakt ist und an einer zweiten Kontaktzone (412) mit dem zweiten Stützelement (42) in Kontakt ist, wobei die zweite Kontaktzone (412) gegenüber der ersten Kontaktzone (411) liegt.

5. Lichtmodul (1) nach einem der vorhergehenden Ansprüche, **dadurch gekennzeichnet, dass** die erste Seite (31) der Projektionsoptik (3) zur Lichtquelle (2) hin orientiert ist.

6. Lichtmodul (1) nach dem vorhergehenden Anspruch, **dadurch gekennzeichnet, dass** die Projektionsoptik (3) einen zentralen Bereich (311), der eine optische Funktion erfüllt, und einen peripheren Bereich (312) umfasst, der den zentralen Bereich (311) umgibt, wobei das zweite Stützelement (42) so angeordnet ist, dass es zumindest teilweise an den peripheren Bereich (312) angepasst ist.

7. Lichtmodul (1) nach einem der vorhergehenden Ansprüche, **dadurch gekennzeichnet, dass** das erste und das zweite Stützelement (41, 42) durch Kleben oder durch Einrasten miteinander verbunden sind.

8. Lichtmodul (1) nach einem der vorhergehenden Ansprüche, **dadurch gekennzeichnet, dass** es ein Diapositiv (5) umfasst, das in Richtung der Ausbreitung der Lichtstrahlen im Lichtmodul vor der Projektionsoptik (3) angeordnet ist, wobei das Diapositiv eine erste Fläche (51) aufweist, die ein zu projizierendes Motiv trägt und zur Projektionsoptik hin orientiert ist, und wobei die gewünschte Position der Fokalebene (F) auf der ersten Fläche oder in der Nähe der ersten Fläche liegt.

9. Lichtmodul (1) nach dem vorhergehenden Anspruch, **dadurch gekennzeichnet, dass** der feste Sockel (7) auch als Träger für das Diapositiv (5) dient.

10. Lichtmodul (1) nach einem der vorhergehenden Ansprüche, **dadurch gekennzeichnet, dass** die Projektionsoptik (3) mehrere Linsen (30) umfasst, die übereinander gestapelt sind.

11. Leuchtvorrichtung für ein Kraftfahrzeug, **dadurch gekennzeichnet, dass** sie ein Lichtmodul nach einem der vorhergehenden Ansprüche umfasst.

12. Leuchtvorrichtung nach dem vorhergehenden Anspruch, **dadurch gekennzeichnet, dass** sie ein Gehäuse umfasst und dass der feste Sockel (7) des Lichtmoduls (1) mit dem Gehäuse verbunden ist

## Claims

1. Light module (1) comprising:

   - a fixed mount (7) intended to act as a support for a light source (2);
   - a projection optic (3) that has a focal plane (F) and is designed to project a light beam from the light rays emitted by the light source (2);
   - a member (4) for holding the projection optic (3), said member comprising:

      ▪ a first support element (41);
      ▪ a second support element (42) that acts as a support for the projection optic;

   wherein:

      - the second support element (42) is arranged so as to allow the thermal expansion of the projection optic (3), causing the focal plane (F) to shift in a first direction (D);

- the first support element (41) exhibits a first coefficient of thermal expansion (α1), the second support element exhibiting a second coefficient of thermal expansion (α2) which is different from the first coefficient of thermal expansion; and

- the first support element (41) is connected on one side to the fixed mount (7) and on the other side to the second support element (42) so as to shift the second support element (42) during the deformation of the first support element (41) in a second direction (C) opposite to the first direction (D);

**Characterized in that**

- the second support element (42) comprises two separate parts (421, 422)
- the second support element (42) comprises a first part (421) and a second part (422) which are fitted one in the other so as to form an accommodating space for the projection optic (3), one of the two parts supporting the projection optic on a first side (31) of the projection optic and the other part comprising an elastically deformable member bearing on the projection optic on a second side (32) on the opposite side from the first side (31).

2. Light module according to Claim 1, **characterized in that**:

- when the temperature varies from an initial value (T0) to a final value (T1):

• the thermal expansion of the projection optic (3) causes the focal plane (F) to shift by a first distance (d1), and
■ the deformation of the first support element (41) shifts the second support element by a second distance (d2);

and wherein the first coefficient of thermal expansion (α1) and the second coefficient of thermal expansion (α2) are defined such that the first distance (d1) is substantially equal to the second distance (d2).

3. Light module according to Claim 1 or according to Claim 2,
**characterized in that** the second coefficient of thermal expansion (α2) is lower than the first coefficient of thermal expansion (α1).

4. Light module according to Claim 1, **characterized in that** the first support element (41) is in contact with the mount (7) in a first contact zone (411) and in contact with the second support element (42) in a second contact zone (412) situated on the opposite side from the first contact zone (411).

5. Light module (1) according to one of the preceding claims,
**characterized in that** the first side (31) of the projection optic (3) is oriented towards the light source (2).

6. Light module (1) according to the preceding claim,
**characterized in that** the projection optic (3) comprises a central zone (311) that realizes an optical function, and a peripheral zone (312) surrounding the central zone (311), the second support element (42) being arranged so as to at least partially conform to the shape of the peripheral zone (312).

7. Light module (1) according to one of the preceding claims,
**characterized in that** the first and second support elements (41, 42) are connected together by adhesive bonding or by snap-fastening.

8. Light module (1) according to one of the preceding claims,
**characterized in that** it comprises a slide (5) disposed upstream of the projection optic (3) in the direction of propagation of the light rays in the light module, the slide having a first face (51) that bears a pattern to be projected and is oriented towards the projection optic, and the desired location of the focal plane (F) being on said first face or in the vicinity of said first face.

9. Light module (1) according to the preceding claim,
**characterized in that** the fixed mount (7) also acts as a support for the slide (5).

10. Light module (1) according to one of the preceding claims,
**characterized in that** the projection optic (3) comprises a plurality of lenses (30) which are stacked one on top of another.

11. Lighting device for a motor vehicle, **characterized in that** it comprises a light module according to one of the preceding claims.

12. Lighting device according to the preceding claim, **characterized in that** it comprises a housing, and **in that** the fixed mount (7) of the light module (1) is connected to the housing.

[Fig. 1]

[Fig. 2]

[Fig. 3]

[Fig. 4]

[Fig. 5]

## RÉFÉRENCES CITÉES DANS LA DESCRIPTION

**Documents brevets cités dans la description**

- DE 102017106654 A
- US 2019204528 A
- JP 2021076621 A